Europäisches Patentamt

European Patent Office

Office européen des brevets

(11) Publication number: **0 383 384**
**A1**

# EUROPEAN PATENT APPLICATION

(21) Application number: **90200293.0**

(22) Date of filing: **09.02.90**

(51) Int. Cl.5: **A23B 7/08, A23B 7/02**

(30) Priority: **16.02.89 NL 8900387**

(43) Date of publication of application:
**22.08.90 Bulletin 90/34**

(84) Designated Contracting States:
**AT BE CH DE DK ES FR GB GR IT LI LU NL SE**

(71) Applicant: **Florigo Industrie B.V.**
**Industrieterrein Honthorst Edisonweg 10**
**NL-3442 AC Woerden(NL)**

(72) Inventor: **Haarman, Jacob**
**Laagnieuwkoop 22**
**NL-3628 GC Kockengen(NL)**
Inventor: **Hak, Jan**
**Voorstraat 4**
**NL-4286 AL Almkerk(NL)**

(74) Representative: **Metman, Karel Johannes et al**
**Octrooibureau Los en Stigter B.V. P.O.Box**
**20052**
**NL-1000 HB Amsterdam(NL)**

(54) Apparatus for drying fruit or vegetable slices or pieces.

(57)    1. An apparatus for drying fruit or vegetable slices or pieces comprises a plurality of superimposed elongated baths (2, 3, 4) for receiving an osmotic fluid, in particular sugar syrup. Overflow channels (6, 11, 16) supply fluid to the baths. Through overflows (8, 13) fluid is discharged from the baths. A cutting machine (25) supplies fruit or vegetable slices or pieces to the first bath (2) near one end thereof. Near the opposite end a pusher plate (27) discharges the fruit or vegetable slices or pieces from the first bath (2) and into the next bath (3) and so on. Conveying devices (37, 41, 45) continuously convey the fruit or vegetable slices or pieces through the baths (2, 3, 4) from the cutting machine (25) to a last pusher plate (47) at the end of the last bath (4).

fig.1

EP 0 383 384 A1

## Apparatus for drying fruit or vegetable slices or pieces

The invention relates to an apparatus for drying fruit or vegetable slices or pieces.

This apparatus is particularly intended to be incorporated in an automatic production line for the production of fruit or vegetable chips. A method therefor is discribed in the Belgium patent application 08800386. There, in order to be dried, the fruit or vegetable slices or pieces are immersed in sugar syrup for 60-180 minutes. As a consequence thereof an osmotic process takes places wherein the undamaged cell walls of the slices or pieces act as a semi-permeable membrane, so that water is extracted from the slices without absorption by the slices of noticeable amounts of low molecular weight sugars from the sugar syrup.

The object of the invention is to provide an apparatus in which the discribed drying process can take place in a continuous and proper manner.

For this purpose the apparatus according to the invention is characterized by an elongated bath for receiving an osmotic fluid, in particular sugar syrup, supply means for supplying fluid to the bath, discharge means for discharging fluid from the bath, supply means for supplying fruit or vegetable slices or pieces to the bath near one end thereof, discharge means for discharging dried fruit or vegetable slices or pieces from the bath near the opposite end thereof, and conveying means for substantially continuously conveying the fruit or vegetable slices or pieces through the bath from the supply means to the discharge means.

With this apparatus a continuous and controlled process can take place. The supply and discharge means for the fruit or vegetables slices or pieces together with the conveying means are able to effect an equal period of stay in the bath for each slice or piece and, by refreshing the liquid, substantially constant process conditions can be obtained in the bath.

Preferably there is provided a plurality of super imposed baths connected in series.

As a result there is obtained a substantial reduction of the floor space required for the apparatus. Further, when the baths are also irrigated with the liquid in series by means of irrigating channels, it is possible to reduce the pumping volume thereof by a factor correpsonding to the number of baths in comparison with one long bath having the same drying area as the sum of the superimposed baths and the same irrigating channel distance.

In this case it is possible that the conveying means in the first bath include a liquid supply line connecting to the first bath at the supply end thereof and preferably extending in the direction of conveyance, the cross-sectional area of the liquid in the first bath increases in direction of conveyance at least along a portion of the length of the first bath.

In this manner the supply of liquid through the liquid supply line causes a flow of the liquid in the bath thereby carrying along the mostly floating fruit or vegetable slices or pieces. Due to the increase of the cross-sectional area of the liquid the rate of flow decreases and the thickness of the layer of floating fruit or vegetable slices or pieces increases in direction of conveyance so that the initial mutual pressure on the slices or pieces is small. This is particularly important at the start of the process since the slices or pieces are then very fragile and susceptible to breakage or damage.

Of course, the transport means as discribed above can also be used in a single bath in which, for example, only the first portion thereof is provided with an increasing cross-sectional area. The size and/or increase of the cross-sectional area per unit of length can also be made adjustable in order to adapt the aparatus to different kinds of fruit and vegetables which require a more or less gender treatment in the initial stage. This can be realized, for example, by an adjustable inclined bottom plate in the bath, of which the length and/or the angle of inclination or height respectively is adjustable. In this manner, an optimal first conveying means or "flume" for effecting a gender treatment can be effected.

As the drying process advances the slices or pieces become more pliable and better resistant to damage. In this stage the conveying means can comprise blade or pusher means being driven in such a manner that they are movable through the liquid a distance in the direction of conveyance and are returned on a higher lever above the liquid.

The blade or pusher means may, for example, be provided in a blade wheel which is rotatable about a horizontal shaft extending transverse to the direction of conveyance. It is possible that the blade or pusher means each consist of a perforated plate or consist of a row of teeth positioned next to each other in a direction transverse to the direction of conveyance. Preferably the blade or pusher means are curved or bent backwardly, as seen in the direction of conveyance.

The blade or pusher means constructed as perforated plates effect therewith, particularly when they are curved backwardly, a simultaneous advancing and immersing of the floating fruit or vegetables slices or pieces thereby insuring an intimate contact with the liquid. The blade or pusher means constructed as a row of teeth and causing a slightly bigger risk of damaging the slices or pieces and being used therefore only in the last part of the apparatus, additionally provide a camming action on the slices or pieces thereby separating the slices or pieces sticking to each other and enabling liquid to come into contact with the whole outer surface of the slices or pieces.

Instead of the blade wheels use can be made of other conveying means for advancing the apple slices. It is conceivable, for example, to use transverse blade or pusher means spaced in the direction of conveyance and suspended from a carrier or rack driven by a moving operating mechanism such that the blade or pusher means are moved a distance through the sugar syrup in direction of conveyance and are moved back again on a higher level. Herein, the horizontal and vertical movements of the blade or pusher means can be coupled and effected by one drive, but on the other hand it is possible to use two separate drives for the horizontal and vertical movements. For instance, the blade or pusher means are connected to a carriage running over rails which are vertically adjustable. The blade or pusher means can be rotationally fixed or pivotable, vertically adjustable, flat or curved, arranged with a fixed or varying spacing, and removable. Furthermore it is conceivable to connect immersing bodies to the carrier between the several blade or pusher means in order to urge the apple slices into the sugar syrup when the carrier is in its lower position. When there is arranged a separate drive for the horizontal and vertical movements of the carrier it is possible to effect an immersing action without any conveying action.

A favourable embodiment of the apparatus according to the invention is characterized in that the discharge means for the fruit or vegetable slices or pieces include a pusher means for pushing them along an upwardly inclined end wall of the bath and out of this bath. Herewith it is possible that the pusher means is provided with a transverse perforated pusher plate which is rotable, through connecting arms, about a horizontal transverse pivot shaft provided at the end of further connecting arms which are pivotable about further pivot shafts, movements of the connecting arms preferably being effected by compressed air bellows.

The slowly moving pusher means will gingerly push the slices or pieces out of the bath, whereafter this slices or pieces fall into a subsequent bath or are deposited onto a conveying means in order to be carried to a further apparatus for performing a subsequent treatment. The compressed air bellows or bellows cylinders offer an advantage in that they do not have moving parts to which the liquid and imparticular sugar syrup can practise its sticky action.

It is favourable when the supply means for the liquid comprise at least one, and preferably a plurality of overflow channels spaced lengthwise of the bath and extending in transverse direction over the bath.

In this manner the liquid is equally distributed along the width and length of the elongated bath and as a result thereof a uniform composition of the liquid can be obtained.

In this case it is favourable if the overflow channel comprises an overflow brim extending from the overflow channel downwardly inclined.

The downwardly inclining overflow brim initiates a uniform liquid film along the whole length of the overflow channel, while the liquid is also prevented from flowing back along the lower side of the overflow brim.

Preferably, the discharge means for discharging liquid from the respective bath comprise an overflow, provided in a chamber connecting to the bath near the bottom thereof.

In this manner the liquid which is just supplied is prevented from being discharged immediately thereafter, while the discharge is also prevented from being clogged by the fruit or vegetables slices or pieces which are mostly floating.

It is an advantage when the liquid circulates in a semi-closed circulation system incorporating a circulating pump, a liquid purifier and a vacuum evaporator and to which a liquid supply for replenishing the amount of liquid connects.

Due to this feature only little liquid is used while a constant composition of the liquid in the bath is permanently maintained.

In a favourable embodiment of the apparatus all motors, bearings and the like used for the apparatus are enclosed in a sealing manner and are isolated from the liquid.

As a result it is prevented that the liquid disturbs the working of the motors, bearings or other rotating components, which could be the case if they would not be arranged in a protected manner, particularly when sugar syrup is used.

The invention will hereafter be elucidated with reference to the drawing showing an exemplary embodiment of the apparatus for drying fruit or vegetable slices or pieces by osmosis.

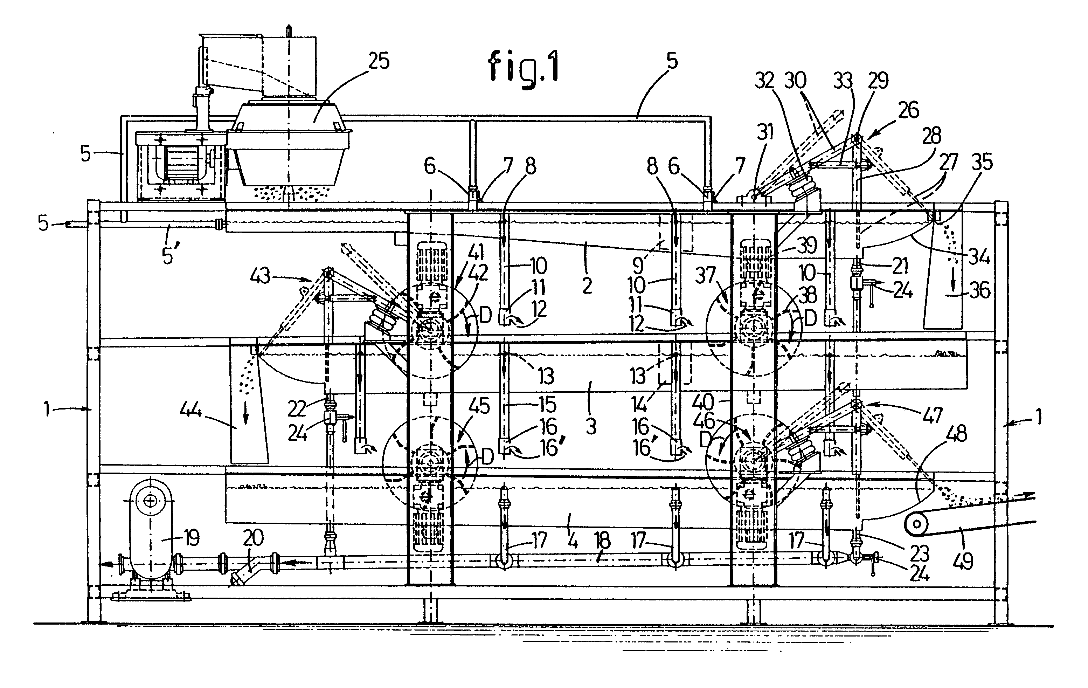

Fig. 1 is a schematic and partially sectional side view of an apparatus for drying fruit or vegetable slices or pieces by osmosis according to the invention.

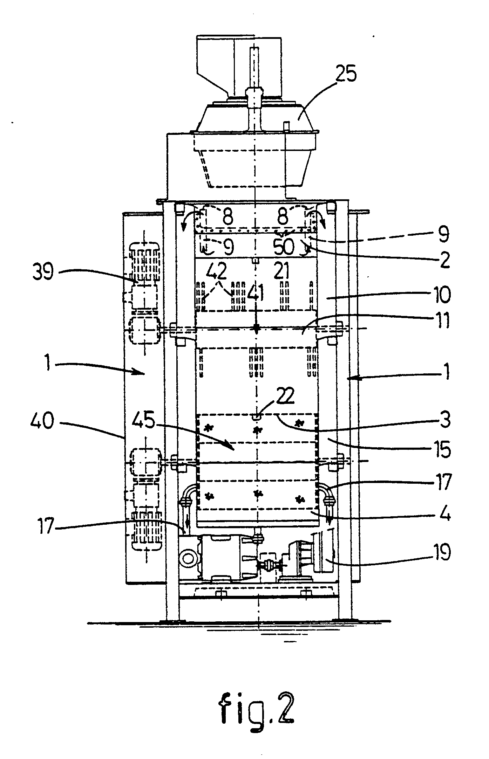

Fig. 2 is a sectional view along the line II-II in fig. 1.

The drawing shows an apparatus for drying fruit or vegetables slices or pieces by osmosis, which is particularly intended as part of a production line for the production of fruit or vegetables chips in accordance with the method of the Belgium patent application 08800386 (or European patent application 0 339 175), which is incorporated herein by reference.

The apparatus includes a frame 1 constructed of stands and girders and supporting a plurality, in this case three, superimposed baths 2, 3, 4 spaced from each other. The baths 2, 3, 4 are adapted to accomodate a liquid, particularly sugar syrup, for extracting water from fruit or vegetable slices or pieces by osmosis prior to baking them in oil in order to produce fruit or vegetable chips. For the sake of convenience it will be assumed in the following description that the apparatus is used for drying apple slices, but it should be noted that all kinds of fruit or vegetables can be processed.

The sugar syrup is supplied to the upper bath 2 through a supply line 5 terminating at one end of the upper bath 2 in a line part 5' extending in longitudinal direction of the bath and opening in overflow channels 6 regularly spaced along the length of the upper bath 2. The overflow channels 6 extend in transverse direction over the upper bath 2 and are provided on one side with a downwardly inclined overflow brim 7 causing the sugar syrup to flow out of the overflow channel 6 and into the upper bath 2 as a uniform film.

The excess sugar syrup is discharged from the upper bath by means of overflows 8 provided in a respective chamber 9 connecting at its lower end with the upper bath 2 near the bottom thereof. These overflows 8 are provided on either longitudinal side of the elongated bath 2, wherein in each case two overflows 8 are arranged opposite to each other. Each overflow 8 which may be adjustable in height, connects to a downwardly extending channel section 10, wherein two channel sections of oppositely arranged overflows 8 connect at their lower end to an overflow channel 11 having an overflow brim 12 extending above the intermediate bath 3 and being constructed in the same way as the overflow channels 6. In the same way as with the upper bath 2, the intermediate bath 3 is provided with overflows 13 in chambers 14 opening through channel sections 15 into overflow channels 16 having overflow brims 16 and extending above the lower bath 4. Also the discharge from the lower bath 4 takes place in the same manner not shown, wherein the overflows connect to vertical lines 17 opening at their lower end into a manifold 18 in which the collected sugar syrup is passed through a vacuum evaporator, in which the water absorbed by the sugar syrup is evaporated therefrom, and is supplied again to the upper bath 2 by means of a pump 19. To the manifold 18 connects in a manner not shown a supply line for sugar syrup in order to replenish sugar syrup which is taken out of the lower bath 4 by the apple slices. In this manner there is created a semi-closed circulation system in which the consumption of sugar syrup is only very small.

In the embodiment shown by way of example the overflows 13 of the intermediate bath 3 are provided on substantially the same location lengthwise of the bath 3 as the overflow channels 11 opening there above. As an alternative it is possible to arrange the overflows 13 at a distance in longitudinal direction of the bath from the respective overflow channels 11 so that there is caused a flow of sugar syrup that is favourable for the contact between the apple slices and the sugar syrup. This is also true for the upper and lower baths 2, 4.

In the manifold 18 is also incorporated a purification filter 20 for filtering impurities from the sugar syrup. To the bottom of each bath 2, 3, 4 near the discharge end thereof drain pipes 21, 22, 23 respectively having a valve 24 are connected, which open into the manifold 18 and with which the baths 2, 3, 4 can be periodically drained and flushed with citric acid containing water to clean the baths and the lines.

For flushing the baths and lines there can be arranged flushing or cleaning lines for supplying the water extending lengthwise above the baths and being provided with regularly spaced downwardly directed spray means for spraying the baths with cleansing water. The lines for the intermediate and lower baths 3, 4 may be provided centrally under the bottoms of the superimposed baths 2, 3 as a supporting part, in which case these bottoms preferably incline from the longitudinal sides of the bath upwardly to the longitudinal center. The drain lines then connect to the lower points of the bottom of the baths.

Besides the cleaning line there may also be provided a steam line having spray nozzles. The object thereof is to obtain a high degree of humidity of the air in the aparatus, especially during the initial stage, by giving steam pulses from time to time. This prevents at least partially the splashed-up syrup from drying and forming a sticky layer to which enhances the apple slices may stick and which is harmfull to the moving parts. When the process advances the degree of humidity normally increases automatically so that then the addition of steam is superfluous.

For obtaining a high degree of humidity it is favourable to accommodate the drying apparatus in a space which is sealed to a degree as high as possible, for example within a casing.

The steam supply can also be utilised for pre-softening the sugar sticking to the apparatus after the draining operation and prior to the cleaning operation of the apparatus thereby facilitating said cleaning operation.

Above the supply end of the upper bath 2 there is provided a cutting machine 25 supported by the frame 1. In the exemplary embodiment the cutting machine 25 is a Urschell CC cutting machine cutting the whole apples supplied thereto into slices having a thickness of 1 to 2 mm. If desired, sugar syrup may be continuously added to the cutting machine 25 in order to protect the cut apple slices from mechanic damage and discoloration of the tissue thereof and to enclose the slices with sugar syrup so that the diffusion process is already initiated and the slices are prevented from sticking to each other.

Further the cutting machine 25 may be arranged movable in transverse direction of the bath 2, for example being connected to a horizontally pivotable arm, in order to distribute the apple slices uniformly over the width of the bath when the bad is wider than the supply opening of the cutting machine 25.

From the cutting machine 25 the cut apple slices fall a small distance and into the sugar syrup of the upper bath 2. The bottom of the bath 2 gradually declines from a horizontal portion under the cutting machine 25, so that the bath 2 is deeper at the end remote from the cutting machine 25 then at a position under the cutting machine 25. As a result thereof the cross-sectional area of the liquid increases in the direction of conveyance of the apple slices whereby the rate of flow of the liquid caused by the supply line 5' gradually decreases and the thickness of the layer of aple slices gradually increases.

Near the discharge end of the upper bath 2 remote from the cutting machine 25 is arranged a discharge means 26 for discharging the apple slices, which have arrived at the discharge end after some time, from the upper bath 2. This discharge means 26 includes a perforated teflon-coated pusher plate 27 suspended from a horizontal tranverse pivot shaft 29 by means of connecting arms 28 and being pivotable about said pivot shaft 29. Said pivot shaft 29 is provided on the end of further connecting arms 30 being rotatable at their other end about a transverse pivot shaft 31 supported by the frame 1. The connecting arms 30 are rotable with respect to the frame 1 about the pivot shaft 31 by means of an air bellows 32 positioned on the frame 1 and engaging the connecting arms 30. The connecting arms 28 together with the pusher plate 27 are rotatable about the pivot shaft 29 by means of an air bellows 33 or the like arranged between the connecting arms 28 and 30. The apple slices can be discharged from the bath 2 with the aid of the discharge means 26 by causing the pusher plate 27 to rotate about the pivot shaft from its vertical starting position, the pusher plate 27 moving along an end wall 34 having the shape of a segment of a circle in order to push the apple slices in front of the pusher plate 27 out of the upper bath 2. In the end position of the pusher plate 27 and the connecting arms 28 (illustrated with interrupted lines) the rotation of the connecting arms 28 about the pivot shaft 29 is stopped and the connecting arms 30 are rotated about the pivot shaft 31 by the air bellows 32 as a consequence of which the pusher plate 27 moves away from the end wall 34. Subsequently the rotation of the connecting arms 30 is stopped, the connecting arms 28 are rotated back to their vertical position and the connecting arms 30 are thereafter rotated back to their lower position so that the discharge means 26 takes its original starting position again.

The end wall 34 curved in the shape of a segment of a circle starts at a distance above the bottom of the bath 2 so that the impurities which have been settled on the bottom of the bath are not pushed out of the bath 2 by the pusher plate 27. The end wall 34 should however start on such a height that the layer of apple slices floating in the sugar syrup is on a higher level than the edge at the beginning of the end wall 34. The end wall 34 terminates in a flanged downwardly inclined overflow brim 35 preventing the sugar syrup carried along with the apple slices from flowing back along the lower side of the end wall 34.

The apple slices pushed out of the upper bath 2 fall into the intermediate bath 3 through a funnel 36. The bath 3 has a horizontal bottom so that the depth of the intermediate bath 3 is equal the whole length thereof. For effecting the conveyance of the apple slices there is provided at a small distance from the funnel 36 a blade wheel 37 acting as conveying means. This blade wheel 37 is equipped with a plurality of, in this case eight, blades 38 each consisting of a perforated plate being bent backwardly, as seen in the direction of rotation D. The enveloping line of the blades 38 is spaced a small distance from the bottom of the intermediate bath 3. The blade wheel 37 is driven by means of an electric motor 39 being vertically accomodated in a casing 40 of the frame 1 and being in engagement with the shaft of the blade wheel 37 through a right-angled gearing.

At a distance behind the blade wheel 37 is positioned a further blade wheel 41 near the discharge end of the intermediate bath 3, the blades 42 of the blade wheel 41 consisting, however, of a plurality of teeth positioned in a row in the direction of the axis of the blade wheel 41 and being curved backwardly, as seen in the direction of rotation D, and when the blade wheel 41 is rotating the teeth not only convey and immerse the apple slices, but also separates the several slices from each other. At the discharge end of the intermediate bath 3, lying under the supply end of the upper bath 2, is a discharge means 43 being constructed in exactly the same manner as the discharge means 26, but being arranged in opposite sense.

Under the discharge end of the intermediate bath 3 there is arranged a funnel 44 opening at its lower end above the supply end of the lower bath 4. The bottom of the lower bath 4 is positioned horizontally just like the intermediate bath 3, while the lower bath 4 is provided with two spaced blade wheels 45, 46 respectively, being constructed similar to the blade wheel 37, 41 respectively, but being turned 180° and rotating in opposite direction. At the discharge end of the lower bath 4 there is positioned again a discharge means 47 distructed in a similar way as the discharge means 26 and being adapted to discharge the apple slices treated in the present apparatus out of the lower bath 4 thereby falling from the end wall 48 onto a conveyor belt 49 in order to be carried to further apparatuses.

Instead of the conveyor belt 49 also a screw conveyor may be used which is immersed in a fluid more than half of its height. The dried, strongly floating apple slices are conveyed by the upper side of the screw blades and are forced over an end wall. By adjusting the rotational speed of the screw conveyor such that between two push cycles of the discharge means 47 the amount of discharge apple slices is just carried through the screw conveyor within that period, the apple slices come out of the screw conveyor as a substantially continuous stream despite of the fact that the screw conveyor is fed intermittently from the lower bath 4.

In the walls of the several baths 2, 3 and 4 can be accommodated heating elements 50 for maintaining the sugar syrup contained in the baths on a certain temperature level. All motors for driving the blade wheels 37, 41, 45 and 46 and the bearings for bearing the shafts thereof are enclosed in a sealing manner so that the sugar syrup cannot reach these components.

The operation of the apparatus discribed above is as follows.

Whole fruit, for instance the apples, are supplied to the cutting machine 25 with a continuous supply speed by means of a conveyor belt not shown, the cutting machine 25 cutting the whole apples into thin slices with a thickness of for instance 1,4 mm, the apple slices then fall into the upper bath 2. In the upper bath 2 there is created a layer of floating apple slices in the contained sugar syrup which is supplied and discharged in a continuous flow, the layer of floating apple slices being continuously replenished at the supply end of the upper bath 2 and being continuously removed at the discharge end by the discharge means 26. The period of stay in the upper bath 2 is equal for all apple slices and can for instance amount to 20 to 70 minutes. The discharge means 26 moves the apple slices having become something more pliable but still being fragile, very slowly along the end wall 34 of the upper bath 2 by means of the perforated pusher plate 27. Most of the sugar syrup carried along with the apple slices flows back into the upper bath 2 through the perforation holes in the pusher plate 27. In the end position of the pusher plate 27 beyond the end wall 34 the apple slices easily slide from the pusher plate 27 due to the teflon-coating thereon. As an additional security there could be provided a washing device flushing possible sticking apple slices from the pusher plate 27 by means of a sugar syrup flow.

The apple slices fall through the funnel 36 into the intermediate bath 3 in which also a layer of floating apples slices is slowly advanced in the sugar syrup. By the blades 38 of the slowly rotating blade wheel 37 the arriving apple slices are not only carried along but are also immersed into the sugar syrup in a smooth manner due to the curved shape of the blades 38 thereby enabling an optimal contact between the sugar syrup and the apple slices. The blades 42 constructed as teeth of the slowly rotating blade wheel 41 spaced a distance behind the blade wheel 37 perform not only a conveying and immersing action but also a separating action thereby separating apple slices which are possibly sticking to each other. The apple slices are removed again from the intermediate bath 3 through the discharge means 43 and fall into the lower bath 4 through the funnel 44.

The layer of apple slices floating in the sugar syrup in the lower bath 4 is conveyed by two blade wheels 45 and 46, the blades of which are also constructed as teeth. In this stage of the water extracting process, the apple slices have now become so pliable that the blades of the blade wheels 41, 45 and 46 constructed as teeth cannot damage or break the apple slices. At the discharge end of the lower bath 4 the apple slices are removed by the discharge means 47 and are deposited onto a conveyor belt 49 conveying the apple slices to further apparatuses, such as a washing apparatus for removing excess sugar syrup from the apple slices and a vacuum baking apparatus for baking the apple slices into apple chips.

The apparatus is controlled fully automatically, while a continuous supply and discharge respectively of sugar syrup to and from the several baths 2, 3, 4 takes place in the apparatus. The rate of flow should be such that the sugar syrup is not too much diluted with water from the apple slices during its flow through the several baths 2, 3, 4. In the now preferable method the Brix value of the sugar syrup should be 65° Bé when it is supplied to the upper bath 2 and it should be higher than 62° Bé when it is leaving the lower bath 4. The sugar syrup is maintained at a constant temperature of approximately 55° C in the baths 2, 3, 4 by means of the heating elements 50 accommodated in the walls of the baths. The water content of the apple slices can be reduced in the apparatus from 85% to about 20% of the original total weight, whereby hardly any sugar is absorbed by the apple slices.

The invention is not restricted to the embodiment shown in the drawing and discribed hereinbefore by way of example, which can be varied in different manners within the scope of the invention.

## Claims

1. Apparatus for drying fruit or vegetable slices or pieces, characterized by an elongated bath for receiving an osmotic fluid, in particular sugar syrup, supply means for supplying fluid to the bath, discharge means for discharging fluid from the bath, supply means for supplying fruit or vegetable slices or pieces to the bath near one end thereof, discharge means for discharging dried fruit or vegetable slices or pieces from the bath near the opposite end thereof, and conveying means for substantially continuously conveying the fruit or vegetable slices or pieces through the bath from the supply means to the discharge means.

2. Apparatus according to claim 1, wherein there is provided a plurality of superimposed baths connected in series.

3. Apparatus according to claim 2, wherein the conveying means in the first bath include a liquid supply line connecting to the first bath at the supply end thereof and extending in the direction of conveyance, the cross-sectional area of the liquid in the first bath increases in direction of conveyance at least along a portion of the length of the first bath.

4. Apparatus according to one of the preceding claims, wherein the conveying means comprise blade or pusher means being driven in such a manner that they are movable through the liquid a distance in the direction of conveyance and are returned on a higher lever above the liquid.

5. Apparatus according to claim 4, wherein the blade or pusher means are provided in a blade wheel which is rotatable about a horizontal shaft extending transverse to the direction of conveyance.

6. Apparatus according to claim 4 or 5, wherein the blade or pusher means each consist of a perforated plate.

7. Apparatus according to claim 4 or 5, wherein the blade or pusher means each consist of a row of teeth positioned next to each other in direction transverse to the direction of conveyance.

8. Apparatus according to one of claims 4-7, wherein the blade or pusher means are curved or bent backwardly, as seen in the direction of conveyance.

9. Apparatus according to one of the preceding claims, wherein the discharge means for the fruit or vegetable slices or pieces include a pusher means for pushing them along an upwardly inclined end wall of the bath and out of this bath.

10. Apparatus according to claim 9, wherein the pusher means is provided with a transverse perforated pusher plate which is rotatable, through connecting arms, about a horizontal transverse pivot shaft provided at the end of further connecting arms which are pivotable about further pivot shafts, movements of the connecting arms preferably being effected by compressed air bellows.

11. Apparatus according to one of the preceding claims, wherein the supply means for the liquid comprise at least one, and preferably a plurality of overflow channels spaced lengthwise of the bath and extending in transverse direction over the bath.

12. Apparatus according to claim 11, wherein the overflow channel comprises an overflow brim extending from the overflow channel downwardly inclined.

13. Apparatus according to one of the preceding claims, wherein the discharge means for discharging liquid from the respective bath comprise an overflow, provided in a chamber connecting to the bath near the bottom thereof.

14. Apparatus according to one of the preceding claims, wherein the liquid circulates in a semiclosed circulation system incorporating a circulating pump, a liquid purifier and a vacuum evaporator and to which a liquid supply for replenishing the amount of liquid connects.

15. Apparatus according to one of the preceding claims, wherein all motors, bearings and the like used for the apparatus are enclosed in a sealing manner and are isolated from the liquid.

fig.1

EP 0 383 384 A1

fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4183963 (BRIMELOW ET AL.) <br> * column 2, lines 28 - 31 * <br> * column 6, lines 31 - 46 * <br> * column 7, lines 16 - 52 * | 1, 15 | A23B7/08 <br> A23B7/02 |
| Y | | 2, 4, 5, 13, 14 | |
| Y | US-A-4769249 (WEBB) <br> * column 3, line 20 - column 4, line 14 * <br> * column 6, line 64 - column 8, line 47 * | 2, 4, 5, 13, 14 | |
| X | US-A-4364968 (WAITMAN ET AL.) <br> * column 1, lines 59 - 67 * <br> * column 3, lines 19 - 28 * <br> * column 3, lines 59 - 62 * | 1 | |
| X | US-A-1506528 (HOYER) <br> * page 1, line 75 - page 3, line 27 * | 1, 4, 7, 9 | |
| A | DE-C-504704 (DUPRAT) <br> * page 1, line 1 - page 2, line 74 * | 1, 2, 13, 14 | TECHNICAL FIELDS SEARCHED (Int. Cl.5) |
| A | EP-A-212583 (KAWAMURA) <br> * page 2, lines 5 - 19 * | 1 | A23B <br> A23N |
| D,P, X | EP-A-339175 (ECLAT PARTICIPATIONS S.A.) <br> * column 5, line 54 - column 6, line 58 * | 1, 14 | |

The present search report has been drawn up for all claims

| Place of search | Date of completion of the search | Examiner |
|---|---|---|
| THE HAGUE | 30 MAY 1990 | VAN OORSCHOT J.W.M. |